(19) Europäisches Patentamt
European Patent Office
Office européen des brevets

(11) **EP 4 152 258 A1**

(12) **EUROPEAN PATENT APPLICATION**
published in accordance with Art. 153(4) EPC

(43) Date of publication:
**22.03.2023 Bulletin 2023/12**

(51) International Patent Classification (IPC):
**G06T 7/246** (2017.01)     **G06T 7/269** (2017.01)

(21) Application number: **20935079.2**

(22) Date of filing: **14.10.2020**

(86) International application number:
**PCT/CN2020/120965**

(87) International publication number:
**WO 2021/227351 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2020 CN 202010415394**

(71) Applicant: **BEIJING BAIDU NETCOM SCIENCE TECHNOLOGY CO., LTD.**
**Beijing 100085 (CN)**

(72) Inventors:
• **YUE, Haixiao**
**Beijing 100085 (CN)**
• **FENG, Haocheng**
**Beijing 100085 (CN)**
• **WANG, Keyao**
**Beijing 100085 (CN)**

(74) Representative: **advotec.**
**Patent- und Rechtsanwaltspartnerschaft**
**Tappe mbB**
**Widenmayerstraße 4**
**80538 München (DE)**

(54) **TARGET PART TRACKING METHOD AND APPARATUS, ELECTRONIC DEVICE AND READABLE STORAGE MEDIUM**

(57)     A target part tracking method and apparatus, an electronic device and a computer-readable storage medium, which relate to the field of artificial intelligence, and specifically relate to computer vision. Said method may comprise: on the basis of a previous detection area for a target part of an object in a previous frame of a video, determining a current detection area for detecting the target part in a current frame of the video (302). The method further comprises: determining the probability of the target part being within the current detection area (304). In addition, the method may further comprise: in response to the probability being greater than or equal to a predetermined threshold, determining a subsequent detection area for detecting the target part in a subsequent frame of the video at least on the basis of the current detection area and the previous detection area (306). According to the method, position information of a tracked target part can be acquired rapidly, efficiently and at a low cost, thereby reducing the computing power and time costs for target part tracking.

FIG. 3

**Description**

This application claims priority benefit of Chinese Patent Application No. 202010415394.2 filed on May 15, 2020.

**TECHNICAL FIELD**

Embodiments of the disclosure mainly relate to the field of artificial intelligence, particularly computer vision, and more particularly to a method and an apparatus for tracking a target part, an electronic device, and a computer-readable storage medium.

**BACKGROUND**

The face recognition system realizes face recognition and comparison tasks through technologies such as, face detection, face tracking, face alignment, face in vivo, face recognition, which has a wide range of applications to fields such as, video surveillance, access control of buildings, face gates, financial verification. Face tracking technology refers to the technology of determining a facial movement trajectory and size changes of an object in a sequence of videos or frames. The technology is one of the important components in the face recognition system, as a method for accurately and quickly obtaining coordinates of the face location. The conventional face tracking technology may only obtain coordinates of a face box at the current frame. After the face is successfully tracked, the coordinates of the face box may be output to a subsequent face alignment model for determining key points. When the face is blocked by an obstacle or exceeds an image acquisition range, the conventional face tracking technology cannot accurately determine whether there is a problem of face tracking failure, resulting in failure of the face recognition function.

**SUMMARY**

According to an example embodiment of the disclosure, a solution for tracking a target part is provided.
In a first aspect of the disclosure, a method for tracking a target part is provided. The method may include determining a current detection area for detecting a target part of an object in a current frame of a video, based on a previous detection area of the target part in a previous frame of the video. The method further includes determining a probability that the target part is located within the current detection area. Additionally, the method may include in response to the probability being greater than or equal to a predetermined threshold, determining a subsequent detection area of the target part in a subsequent frame of the video based on at least the current detection area and the previous detection area.
In a second aspect of the disclosure, an apparatus for tracking a target part is provided. The apparatus includes: a current detection area determination module, a probability determination module, and a subsequent detection area determination module. The current detection area determination module is configured to determine a current detection area for detecting a target part of an object in a current frame of a video, based on a previous detection area of the target part in a previous frame of the video. The probability determination module is configured to determine that the target part is located within the current detection area. The subsequent detection area determination module is configured to determine, in response to the probability being greater than or equal to a predetermined threshold, a subsequent detection area of the target part in a subsequent frame of the video based on at least the current detection area and the previous detection area.
In a third aspect of the disclosure, an electronic device is provided. The electronic device includes: one or more processors and storage means for storing one or more programs. When the one or more programs are executed by the one or more processors, the one or more processors are caused to implement the method according to the first aspect of the disclosure.
In a fourth aspect of the present disclosure, a computer-readable storage medium is provided. The storage medium has stored a computer program. When the computer program is executed by a processor, the method according to the first aspect of the disclosure is implemented.
In a fifth aspect of the present disclosure, a system for tracking a target part is provided. The system includes: a video acquisition module, a computing module in communication connection with the video acquisition module and an output display module. The video acquisition module is configured to provide a video associated with a target part of an object. The computing module is configured to implement the method according to the first aspect of the disclosure. The output display module is configured to display processing results of the computing module.
It should be understood that the matters described in this summary are not intended to limit key or critical features of the embodiments of the disclosure, nor are intended to limit the scope of the disclosure. Other features of the disclosure may become apparent from the following description.

BRIEF DESCRIPTION OF THE DRAWINGS

The above and other features, advantages and aspects of various embodiments of the disclosure may become more apparent when in conjunction with the accompanying drawings and with reference to the following detailed description. In the drawings, the same or similar reference numbers refer to the same or similar elements.

FIG 1 illustrates a schematic diagram of an example environment in which various embodiments of the disclosure may be implemented.

FIG 2 illustrates a schematic diagram of a detailed example environment in which various embodiments of the disclosure may be implemented.

FIG 3 illustrates a flowchart of a process for tracking a target part according to an embodiment of the disclosure.

FIG 4 illustrates a block diagram of a system for tracking a target part according to an embodiment of the disclosure.

FIG 5 illustrates a block diagram of an apparatus for tracking a target part according to an embodiment of the disclosure.

FIG 6 illustrates a block diagram of a computing device capable of implementing various embodiments of the disclosure.

## DETAILED DESCRIPTION

Embodiments of the disclosure may be described in more detail below with reference to the accompanying drawings. While some embodiments of the disclosure are shown in the drawings, it should be understood that the disclosure may be implemented in various forms and should not be construed as limited to the embodiments set forth herein. Rather, the embodiments are provided for the purpose of a more thorough and complete understanding of the disclosure. It should be understood that, the drawings and embodiments of the disclosure are only exemplary, and are not intended to limit the protection scope of the disclosure.

In the description on embodiments of the disclosure, the term "comprising" and the like should be understood as open-ended inclusion, i.e., "including but not limited to". The term "based on" should be understood as "based at least in part on". The terms "an embodiment" or "the embodiment" should be understood to mean "at least one embodiment". The terms "first", "second", etc. may refer to different or the same objects. Other explicit and implicit definitions may also be included below.

For the interference situation described above, the face tracking technology generally has the following three optimization solutions.

(1) A model-based face tracking solution. This solution is mainly based on a skin color model, a texture model, etc. A parameter model is established by acquiring prior knowledge of the face and a sliding window for each frame of image is established to perform model matching, so as to achieve face tracking. However, this solution has low accuracy of tracking faces with different scales and partially occluded faces. Also, it is impossible to judge whether the tracking fails during the tracking process.

(2) A face tracking solution based on motion information. This solution performs motion estimation of faces based on methods such as optical flow analysis. However, this solution has low accuracy of tracking faces with the changed scales in successive frames, has poor effect of tracking fast-moving faces.

(3) A face tracking solution based a neural network. This solution uses the neural network to learn face features implicitly, and performs feature matching to the images by using a sliding window, so as to achieve face tracking. This solution is better than the solution (1) for the feature expression of faces, but the calculation amount is huge, and it is difficult to ensure real-time performance on the embedded end.

As mentioned above, there is an urgent need for a method for tracking a target part, to track location information of the target part quickly, efficiently and at low cost, thus reducing the computing power and time cost during the target part tracking.

According to an embodiment of the disclosure, a target part tracking solution is proposed. In this solution, a motion prediction function for a target part may be increased on the basis of target part detection. After a detection area where the target part is located in a current frame is predicted based on a previous frame, it is determined whether the target part is located in the detection area while key points of the target part are determined based on the detection area. When it is judged that the target part is still located in the detection area, meaning that the motion prediction function is normal, it may be continued to predict a detection area of the target part in a subsequent frame. In this way, there is no need to use a complex model for target part detection with large computational power demands. When it is judged that the target part is not located in the detection area, meaning that the result of motion prediction does not match the actual situation, the prediction result may be corrected by directly calling the model for target part detection at this time. In this way, even if the target part of the monitored object is occluded or the monitored object moves irregularly, the detection area in the subsequent frame may be determined with low cost and high accuracy.

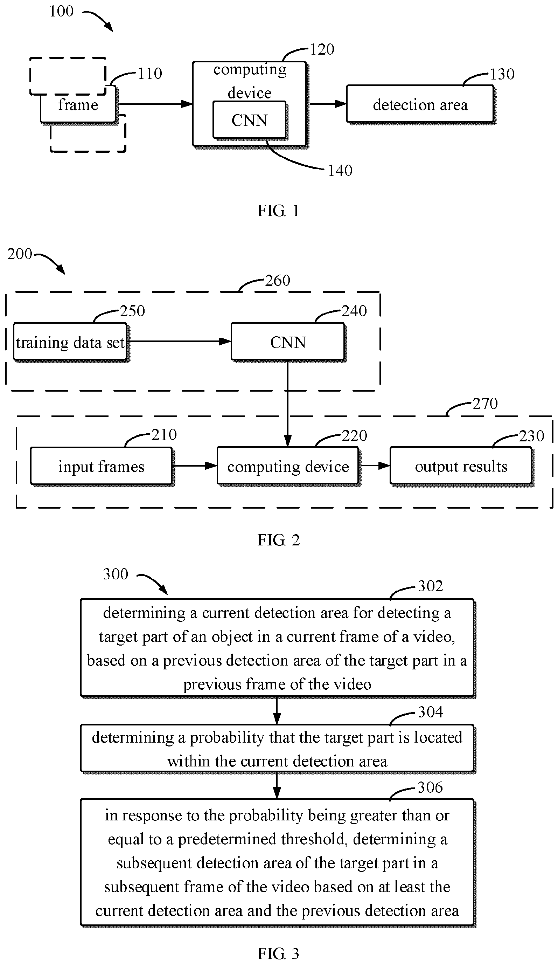

Embodiments of the disclosure may be described in detail below with reference to the accompanying drawings. FIG 1 illustrates a schematic diagram of an example environment 100 in which various embodiments of the disclosure may be implemented. As shown in FIG 1, an example environment 100 includes a frame 110 in a surveillance video, a computing device 120, and a determined detection area 130.

The frame 110 may be one or more frames in a real-time surveillance video acquired by an image acquisition device, which is connected to the computing device 120. As an example, the image acquisition device may be set in a public place with a high human flow (e.g.,

video surveillance, face gate, etc.), so as to obtain image information of each person in the crowd passing through the public place. As another example, the image acquisition device may be located in a private place with a low human flow (e.g., building access control, financial verification, etc.). It should be understood that, the objects for acquiring image information may not be limited to human, but may also include animals that need to be identified in batches (e.g., animals in zoos or breeding places) and still objects (e.g., goods on conveyor belts). The computing device 120 may receive the frame 110 to determine the detection area 130 of a target part (such as a face) of a monitored object.

It should be understood that, the detection area described herein is an area used for detecting the target part. For example, the target part may be calibrated by a detection box or other suitable tools, or only a partial area on the image may be determined without actually calibrating. As an example, the detection area may have various implementation forms, for example, may have a shape such as a rectangle, a circle, an ellipse, an irregular shape, etc., or may be delineated by a solid line, a dotted line, a dot-dash line, and the like.

After the detection area 130 of the frame 110 is determined, the computing device 120 may determine a plurality of key points of the target part in the detection area 130 through an artificial intelligence network such as a convolutional neural network (CNN) loaded therein and determine whether the target part is still within the detection area 130. In this way, it is monitored whether the prediction function of the computing device 120 is normal. In addition, when it is determined that the target part is not located within the detection area 130, the computing device 120 also needs to determine the detection area of the target part in the subsequent frame through another artificial intelligence network such as CNN loaded therein.

The construction and usage of the artificial intelligence network in the computing device 120 may be described below by taking CNN as an example with reference to FIG 2.

FIG 2 illustrates a schematic diagram of a detailed example environment 200 in which various embodiments of the disclosure may be implemented. Similar to FIG 1, the example environment 200 may include a computing device 220, input frames 210, and output results 230. The difference is that the example environment 200 may generally include a model training system 260 and a model application system 270. As an example, the model training system 260 and/or model application system 270 may be implemented in the computing device 120 as shown in FIG 1 or the computing device 220 as shown in FIG 2. It should be understood that, the structure and functionality of the example environment 200 are described for exemplary purposes only and are not intended to limit the scope of the subject matter described herein. The subject matter described herein may be implemented in different structures and/or functions.

As mentioned above, the processes of determining the key points of the target part (e.g., the face) of the monitored object and determining whether the target part is located within the detection area, and the process of determining the detection area of the target part, may be divided into two phases: a model training phase and a model application phase. As an example, for the processes of determining the key points of the target part and determining the probability that the target part is within the detection area, in the model training phase, the model training system 260 may train CNN 240 that determines the key points and probability by using a training data set 250. In the model application phase, the model application system 270 may receive the trained CNN 240 such that the key points and probability are determined by the trained CNN 240 based on the input frames 210 as the output results 230. It should be understood that, the training data set 250 may be a large number of annotated reference frames.

As another example, for the process of determining the detection area of the target part, in the model training phase, the model training system 260 may train the CNN 240 that determines the detection area by using the training data set 250. In the model application phase, the model application system 270 may receive the trained CNN 240 such that the detection area of the target part is determined by the trained CNN 240 based on the input frames 210.

In other embodiments, CNN 240 may be constructed as a learning network. Such a learning network may also be referred to as a learning model, or simply a network or model. In some embodiments, the learning network may include multiple networks, e.g., which are respectively used to determine the key points of the target part (such as the face) of the monitored object, to determine a probability of whether the target part is located within the detection area, and to determine the detection area of the target part. Each of these networks may be a multi-layer neural network, which may be composed of a large number of neurons. Through the training process, corresponding parameters of the neurons in each network may be determined. The parameters of the neurons in these networks are collectively referred to as the parameters of the CNN 240.

The training process of the CNN 240 may be performed in an iterative manner. Specifically, the model training system 260 may obtain reference images from the training data set 250 and use the reference images for one iteration of the training process to update the corresponding parameters of CNN 240. The model training system 260 may repeat the above process based on the plurality of reference images in the training data set 250, until at least some of the parameters of the CNN 240 are converged. In this way, final model parameters are obtained.

The technical solutions described above are only used as examples, rather than limiting the present invention. It should be understood that, the various networks may also be arranged in other manners and connection relationships. In order to explain the principle of the above solutions more clearly, the following may describe the process of target part tracking in more detail with reference to FIG 3.

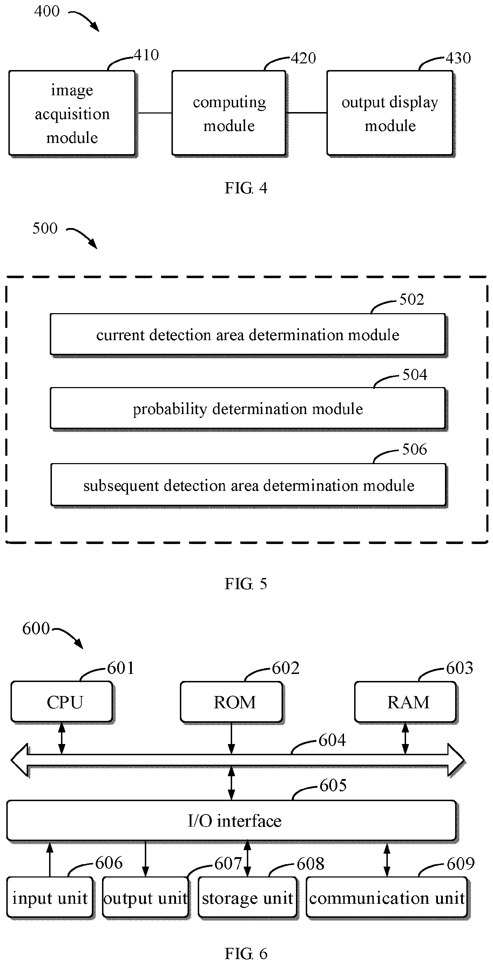

FIG 3 illustrates a flowchart of a process 300 for tracking a target part according to an embodiment of the disclosure. In some embodiments, the method 300 may be implemented in the computing device 120 in FIG 1, the computing device 220 in FIG 2, and the device shown in FIG 6. The process 300 for tracking a target part in accordance with an embodiment of the disclosure is now described with reference to FIG 1. For ease of understanding, the specific examples mentioned in the following description are all exemplary, and are not intended to limit the protection scope of the disclosure.

At 302, the computing device 120 may determine a current detection area for detecting a target part of an object in a current frame of a video, based on a previous detection area of the target part in a previous frame of the video. In some embodiments, the computing device 120 may apply the previous detection area to a location prediction model, to determine the current detection area. As an example, the location prediction model may be at least one of a Kalman filter, a Wiener filter, a strong tracking filter, a simple moving average prediction model, a double moving average prediction model, a single exponential smoothing model, a double exponential smoothing model, a Holt exponential smoothing model, etc.

Taking the Kalman filter as an example, after receiving a frame before the frame 110 in the surveillance video, the Kalman filter located in the computing device 120 or connected to the computing device may predict a detection area in the next frame based on the frame and prior information in the Kalman filter. The calculation equations for algorithms in the Kalman filter are as follows.

State equation:

$$X_k = A_{k, k-1} \cdot X_{k-1} + V_{k-1};$$

and
Observation equation:

$$Y_k = H \cdot X_k + W_k;$$

In the above equations, $X_k$ is a state vector of the kth frame and $X_{k-1}$ is a state vector of the (k-1)th frame, $Y_k$ is an observation vector of the kth frame; $A_{k, k-1}$ is a state transition matrix; H is an observation matrix, $V_{k-1}$ is a system state noise of the (k-1)th frame, $W_k$ is an observation noise of the kth frame, Q and R are the corresponding variance matrices, respectively.

Assuming that the state vector is $X_k = [S_{xk}, S_{yk},$ $V_{xk}, V_{yk}]$, where $S_{xk}$ is a x-axis coordinate of a center point of a face box in the current frame, $S_{yk}$ is a y-axis coordinate of the center point, $V_{xk}$ is a x-axis direction speed of the center point, and $V_{yk}$ is a y-axis direction speed of the center point. The observation vector is $Y_k$ = $[O_{xk}, O_{yk}]$, where $O_{xk}$ is a x-axis coordinate of a center point of the observed face box in the current frame and $O_{yk}$ is a y-axis coordinate of the center point of the observed face box in the current frame. The state update equation is:

$$X_{k,k-1} = A_{k,k-1} X_{k-1}$$

$$X_k = K_{k,k-1} + K_k [Y_k - H_k X_{k,k-1}]$$

$$K_k = P_{k,k-1} H_k^T [H_k P_{k,k-1} + R]$$

$$P_{k,k-1} = A_{k,k-1} P_{k-1} A_{k,k-1}^T + Q$$

$$P_k = [I - K_k H_k] P_{k,k-1}$$

In the equation, $X_{k, k-1}$ is a one-step state estimation value, $X_k$ is a correction value of the prior estimation $X_{k, k-1}$, $X_k$ is a Kalman filter gain matrix, $P_{k, k-1}$ is a covariance matrix of $X_{k, k-1}$, $P_k$ is a covariance matrix of $X_k$, and I is an identity matrix.

Thus, when the computing device 120 receives the frame 110, the predicted detection area may be used to determine information for key points of the target part in the frame 110, e.g., the coordinates of each key point. It should be understood that, the motion prediction based on the Kalman filter may be implemented flexibly. For example, the detection area in the next frame may also be predicted based on the key point information of the target part in the previous frame and the prior information in the Kalman filter.

In some embodiments, the target part is the face, eyes, or fingerprint or the like of the object. The object is not limited to human. It should also be understood that, the objects described herein may be humans, as well as animals or objects in motion (e.g., goods on conveyor belts). The solutions of the disclosure may be applied to the recognition of multi-object scenes. Specifically, the disclosure may identify each or every animal in an area of a zoo or ranch that animals must pass through, and may also identify each or every commodity or factory product in a transport lane of goods in a mall or factory, so as to achieve automated logistics information management.

At 304, the computing device 120 may determine the probability that the target part is within the current detection area. As an example, the computing device 120 may apply the current detection area to a probability determination model, such as one included in the above-described CNN 240, so as to determine the probability that the target part is located within the current detection area. The probability determination model may be trained based on a reference detection area in the reference frame and a pre-marked reference probability. In some embodiments, the probability determination model quickly determines the probability that the target part is located within the current detection area by more simply determining the probability that a specific target part (such as a face) is present in the current detection area. The probability may be output as a score, ranging from 0 to 1. The higher the score, the higher the probability that there is a human face in the face box. Preferably, the predetermined threshold for judging whether there is a human face may be 0.5 or other value.

In some embodiments, the artificial intelligence network in the computing device 120 may also determine a plurality of key points of the target part based on the current detection area while it is determined the probability that the target part is located within the current detection area. As an example, the computing device 120 may apply the current detection area to a key point determination model, such as one included in the above-described CNN 240, so as to determine the key points of the target part. The key point determination model is trained based on the reference detection area in the reference frame and pre-marked reference key points. Alternatively or additionally, the key point determination model and the above probability determination model may be combined into one model that simultaneously determines multiple key points of the target part and the probability that the target part is located within the current detection area based on the current detection area. In this way, it is possible to know whether the predicted detection area is correct without significantly increasing the computing power.

Thereafter, the computing device 120 may determine whether the probability is greater than or equal to a predetermined threshold. At 306, when the probability is greater than or equal to the predetermined threshold, the computing device 120 may determine a subsequent detection area for detecting the target part in a subsequent frame of the video based at least on the current detection area and the previous detection area. As an example, a location prediction model in the computing device 120 may determine the subsequent detection area based on the current detection area and prior information. As mentioned above, the location prediction model may be at least one of a Kalman filter, a Wiener filter, a strong tracking filter, a simple moving average prediction model, a double moving average prediction model, a single exponential smoothing model, a double exponential smoothing model, a Holt exponential smoothing model, etc. In this way, when there is no abnormal movement or occlusion for the monitored object, the computing device 120 may determine the detection area of the target part by using the location prediction model with less computing power needs, thus significantly saving computing resources.

In addition, when the probability is less than the predetermined threshold, the computing device 120 may detect the target part in the subsequent frame, and determine a subsequent detection area in the subsequent frame for detecting the target part based on the detection result. As an example, the computing device 120 may apply the subsequent frames to a area determination model (such as one included in the above-described CNN 240) that determines the subsequent detection areas of the target part. The area determination model is trained based on reference frames and pre-marked reference detection areas. In this way, the errors in motion prediction may be found in time and may be corrected by using a more accurate area determination model, thus ensuring the correctness of tracking an area.

In some embodiments, the area determination model may perform face area detection on the frame 110. For example, basic facial features may be extracted from the frame 110 through a six-layer convolutional network. Each layer of convolutional network may perform one image down-sampling. Based on the last three layers of convolutional network, a fixed number of face anchor areas with different sizes may be preset respectively, for performing face detection area regression. The face detection area is finally obtained. It should be understood that, the above examples are only exemplary, convolutional network with other layer number may also be used, and they are not limited to determining the detection area of the human face. In this way, the detection area of the target part in the frame 110 may be quickly identified based on the area determination model.

In this way, the disclosure may transfer most of the work for determining the detection area of the target part to a motion prediction model with less computing power needs, by adding the motion prediction model to a conventional system, thus saving computing power resources. In addition, the disclosure also integrates the above probability determination model on the basis of the key point determination model, so that the results of motion prediction may be checked frame by frame, and the area determination model may be used to obtain correct detection areas when prediction errors may occur. Thus, the disclosure improves the accuracy of detection area prediction while saving computing power. In addition, when the key point determination model and the probability determination model are merged into one model, the time for the computing device 120 processing the input frame 110 is not increased. Thus, the disclosure improves the performance of the computing device 120 for determining the detection area in an almost flawless manner, thus optimizing the user experience.

In addition, the disclosure also provides a system 400 for tracking a target part. As shown in FIG 4, the system includes an image acquisition module 410, which may be an image sensing device such as an RGB camera. The system 400 may also include a computing module 420 in communication with the image acquisition module 410, which is used to perform the various methods and processes described above, such as the process 300. In addition, the system 400 may include an output display module 430 for displaying processing results of the computing module 420 to a user. For example, the output display module 430 can display face tracking results of the monitored object to the user.

In this way, system-level face tracking may be achieved, and the computing power needs may be significantly reduced on the premise that the accuracy of face tracking and recognition remains unchanged.

In some embodiments, system 400 may be applied to face tracking scenarios for multiple pedestrians. As an example, the system 400 may be applied in a scenario of building access control or a scenario of financial verification. When the face of the monitored object enters a monitoring field of view, the system 400 may predict a face location of the monitored object in the next frame of a monitoring image, based on the first frame containing the face of the monitored object and the prior information, and determine whether the face of the object is still contained at the location while determining key points. In this way, the computing power for repeated face detection may be saved by predicting the location of the face, and the prediction accuracy may be determined by subsequent face review. When the prediction is found to be inaccurate, the face detection may be restarted to ensure that the face tracking results are available at any time.

As another example, the system 400 may also be applied in the field of video surveillance, especially in the case of performing body temperature monitoring on multiple monitored objects at the entrance of a subway or a venue. For example, when the faces of multiple monitored objects enter the monitoring field of view, the system 400 may predict each face location of each object in the next frame of each monitoring image based on the first frame of each monitoring image containing the faces of each object and the prior information, and determine whether the face of the corresponding object is still contained at the corresponding location while determining the key points. Since multiple faces may need to be tracked at the same time, the system 400 of the disclosure may greatly save computing power for repeated face detection, while ensuring that the face tracking results are correct and available at any time.

FIG 5 illustrates a block diagram of an apparatus 500 for tracking a target part according to an embodiment of the disclosure. As shown in FIG 5, the apparatus 500 may include: a current detection area determination module 502, a probability determination module, and a subsequent detection area determination module. The current detection area determination module is configured to determine a current detection area for detecting a target part of an object in a current frame of a video, based on a previous detection area of the target part in a previous frame of the video. The probability determination module is configured to determine that the target part is located within the current detection area. The subsequent detection area determination module is configured to determine, in response to the probability being greater than or equal to a predetermined threshold, a subsequent detection area of the target part in a subsequent frame of the video based on at least the current detection area and the previous detection area.

In some embodiments, the apparatus 500 may further include: a target part detection module and an area determination module. The target part detection module is configured to in response to the probability being less than the predetermined threshold, detect the target part in the subsequent frame. The area determination module is configured to determine the subsequent detection area for detecting the target part in the subsequent frame based on a detected result.

In some embodiments, the target part detection module may include: a subsequent frame application module, configured to determine the subsequent detection area of the target part by applying the subsequent frame to an area determination model. The area determination model is obtained by training based on a reference frame and a pre-marked reference detection area.

In some embodiments, the probability determination module 504 may include: a current detection area application module, configured to determine the probability that the target part is located within the current detection area by applying the current detection area to a probability determination model. The probability determination model is obtained by training based on a reference detection area in a reference frame and a pre-marked reference probability.

In some embodiments, the current detection area determination module 502 may include: a previous detection area application module, configured to determine the current detection area by applying the previous detection area to a location prediction model. The location prediction model may be at least one of: a Kalman filter, aWiener filter, and a strong tracking filter.

In some embodiments, the target part may be at least one of face, eyes, and fingerprints of the object.

In some embodiments, the apparatus 500 may further include: a key point determination module, configured to determine key points of the target part based on the current detection area.

In some embodiments, the key point determination module may include: a current detection area application module, configured to determine the key points of the target part by applying the current detection area to a key point determination model. The key point determination model is obtained by training based on a reference detection area in a reference frame and pre-marked reference key points.

FIG 6 illustrates a block diagram of a computing device 600 capable of implementing various embodiments of the disclosure. The device 600 may be used to implement the computing device 120 of FIG 1 or the computing device 220 of FIG 2. As shown in figures, the device 600 includes a central processing unit (CPU) 601 that may perform various appropriate actions and processes based on a computer program stored in a read only memory (ROM) 602 or loaded from a storage unit 608 into a random access memory (RAM) 603. In the RAM 603, various programs and data necessary for the operation of the device 600 may also be stored. The CPU 601, the ROM 602, and the RAM 603 are connected to each other through a bus 604. An input/output (I/O) interface 605 is also connected to the bus 604.

Various components in the device 600 are connected to the I/O interface 605, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, a modem, a wireless communication transceiver, and the like. The communication unit 609 allows the device 600 to exchange information/data with other devices through a computer network such as the Internet and/or various telecommunication networks.

The processing unit 601 performs the various methods and processes described above, such as the process 300. For example, in some embodiments, the process 300 may be implemented as computer software programs tangibly embodied on a machine-readable medium, such as the storage unit 608. In some embodiments, part or all of the computer programs may be loaded and/or installed on the device 600 via the ROM 602 and/or the communication unit 609. When the computer programs are loaded into the RAM 603 and executed by the CPU 601, one or more steps of the process 300 described above may be performed. Alternatively, in other embodiments, the CPU 601 may be configured to perform the process 300 by any other suitable means (e.g., by means of firmware).

The functions described herein above may be performed, at least in part, by one or more hardware logic components. For example, without limitation, exemplary types of hardware logic components that may be used include: a field programmable gate array (FPGA), an application specific integrated circuit (ASIC), an application specific standard product (ASSP), a system on a chip (SOC), a load programmable logic device (CPLD) and so on.

The program codes for implementing the method of the disclosure may be written in any combination of one or more programming languages. These program codes may be provided to a processor or controller of a general purpose computer, a special purpose computer or other programmable data processing apparatus, such that the program codes, when executed by the processor or controller, cause the functions/operations specified in the flowcharts and/or block diagrams to be implemented. The program codes may be executed completely on the machine, partially on the machine, partially on the machine as an independent software package and partially on a remote machine or completely on a remote machine or server.

In the context of the disclosure, a machine-readable medium may be a tangible medium, which may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, an apparatus, or a device, or any suitable combination of the above. More specific examples of the machine-readable storage medium may include one or more wire-based electrical connections, a portable computer disk, a hard disk, a random access memory (RAM), a read only memory (ROM), an erasable programmable read-only memory (EPROM or flash memory), an optical fiber, a portable compact disk read-only memory (CD-ROM), an optical storage device, a magnetic storage device, or any suitable combination of the above.

Additionally, although operations are depicted in a particular order, it should be understood that, such operations are needed to be performed in the particular order shown or in a sequential order, or that all operations illustrated should be performed to achieve desirable results. Under certain circumstances, multitasking and parallel processing may be advantageous. Likewise, although the above discussion contains details of several specific implementation, these should not be construed as limitations on the scope of the disclosure. Some features that are described in the context of separate embodiments may also be implemented in combination in a single implementation. Conversely, various features that are described in the context of a single implementation may also be implemented in multiple implementations separately or in any suitable sub-combination.

Although the subject matter has been described in language specific to structural features and/or logical acts of method, it should be understood that, the subject matter defined in the appended claims is not necessarily limited to the specific features or acts described above. Rather, the specific features and acts described above are merely example forms of implementing the claims.

**Claims**

1. A method for tracking a target part, comprising:

determining a current detection area for detecting a target part of an object in a current frame of a video, based on a previous detection area of the target part in a previous frame of the video; determining a probability that the target part is located within the current detection area; and in response to the probability being greater than or equal to a predetermined threshold, determining a subsequent detection area of the target part in a subsequent frame of the video based on at least the current detection area and the previous detection area.

2. The method of claim 1, further comprising:

    detecting the target part in the subsequent frame, in response to the probability being less than the predetermined threshold; and determining the subsequent detection area for detecting the target part in the subsequent frame based on a detected result.

3. The method of claim 2, wherein detecting the target part in the subsequent frame comprises: determining the subsequent detection area of the target part by applying the subsequent frame to an area determination model, wherein the area determination model is obtained by training based on a reference frame and a pre-marked reference detection area.

4. The method of claim 1, wherein determining the probability comprises: determining the probability that the target part is located within the current detection area by applying the current detection area to a probability determination model, wherein the probability determination model is obtained by training based on a reference detection area in a reference frame and a pre-marked reference probability.

5. The method of claim 1, wherein determining the current detection area comprises: determining the current detection area by applying the previous detection area to a location prediction model, wherein the location prediction model is at least one of:

    a Kalman filter,
    aWiener filter, and
    a strong tracking filter.

6. The method of claim 1, wherein the target part is at least one of face, eyes, and fingerprints of the object.

7. The method of claim 1, further comprising: determining key points of the target part based on the current detection area.

8. The method of claim 1, wherein determining the key points comprises: determining the key points of the target part by applying the current detection area to a key point determination model, wherein the key point determination model is obtained by training based on a reference detection area in a reference frame and pre-marked reference key points.

9. An apparatus for tracking a target part, comprising:

    a current detection area determination module, configured to determine a current detection area for detecting a target part of an object in a current frame of a video, based on a previous detection area of the target part in a previous frame of the video;
    a probability determination module, configured to determine that the target part is located within the current detection area; and
    a subsequent detection area determination module, configured to determine, in response to the probability being greater than or equal to a predetermined threshold, a subsequent detection area of the target part in a subsequent frame of the video based on at least the current detection area and the previous detection area.

10. The apparatus of claim 9, further comprising:

    a target part detection module, configured to detect, in response to the probability being less than the predetermined threshold, the target part in the subsequent frame; and
    an area determination module, configured to determine the subsequent detection area for detecting the target part in the subsequent frame based on a detected result.

11. The apparatus of claim 9, wherein the target part detection module comprises: a subsequent frame application module, configured to determine the subsequent detection area of the target part by applying the subsequent frame to an area determination model, wherein the area determination model is obtained by training based on a reference frame and a pre-marked reference detection area.

12. The apparatus of claim 11, wherein the probability determination module comprises: a current detection area application module, configured to determine the probability that the target part is located within the current detection area by applying the current detection area to a probability determination model, wherein the probability determination model is obtained by training based on a reference detection area in a reference frame and a pre-marked reference probability.

13. The apparatus of claim 9, wherein the current detection area determination module comprises: a previous detection area application module, configured to determine the current detection area by applying the previous detection area to a location prediction model, wherein the location prediction model is at least one of:

a Kalman filter,
aWiener filter, and
a strong tracking filter.

14. The apparatus of claim 9, wherein the target part is at least one of face, eyes, and fingerprints of the object.

15. The apparatus of claim 9, further comprising:
a key point determination module configured to determine key points of the target part based on the current detection area.

16. The apparatus of claim 9, wherein the key point determination module comprises:
a current detection area application module, configured to determine the key points of the target part by applying the current detection area to a key point determination model, wherein the key point determination model is obtained by training based on a reference detection area in a reference frame and pre-marked reference key points.

17. An electronic device, comprising:

one or more processor; and
storage means configured to store one or more programs, when the one or more programs are executed by the one or more processor, the one or more processor is caused to execute the method according to any one of claims 1 to 8.

18. A computer readable storage medium having computer programs stored thereon, wherein when the computer programs are executed by a processor, the method according to any one of claims 1 to 8 is implemented.

19. A system for tracking a target part, comprising:

a video acquisition module, configured to provide a video associated with a target part of an object;
a computing module in communication connection with the video acquisition module, configured to implement the method according to any one of claims 1 to 8; and
an output display module, configured to display processing results of the computing module.

100

—110

frame

—120

computing device

CNN

—130

detection area

—140

FIG. 1

200

—260

—250

training data set

—240

CNN

—270

—210

input frames

—220

computing device

—230

output results

FIG. 2

300

—302

determining a current detection area for detecting a target part of an object in a current frame of a video, based on a previous detection area of the target part in a previous frame of the video

—304

determining a probability that the target part is located within the current detection area

—306

in response to the probability being greater than or equal to a predetermined threshold, determining a subsequent detection area of the target part in a subsequent frame of the video based on at least the current detection area and the previous detection area

FIG. 3

400

410
image acquisition module

420
computing module

430
output display module

FIG. 4

500

502
current detection area determination module

504
probability determination module

506
subsequent detection area determination module

FIG. 5

600

601
CPU

602
ROM

603
RAM

604

605
I/O interface

606
input unit

607
output unit

608
storage unit

609
communication unit

FIG. 6

## INTERNATIONAL SEARCH REPORT

| International application No. |
|---|
| **PCT/CN2020/120965** |

| A. | CLASSIFICATION OF SUBJECT MATTER |
|---|---|

G06T 7/246(2017.01)i; G06T 7/269(2017.01)i

According to International Patent Classification (IPC) or to both national classification and IPC

| B. | FIELDS SEARCHED |
|---|---|

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT, WPI, EPODOC, CNKI: 目标, 对象, 脸, 人, 车, 面部, 指纹, 眼睛, 跟踪, 定位, 检测, 预测, 阈值, 模型, 神经网络, 滤波器, 区域, 框, 位置, object, target, tracking, vehicle, car, face, eye, detect, predict+, threshold, model, filter, nueral network, area, box, position

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 111627046 A (BEIJING BAIDU NETCOM SCIENCE AND TECHNOLOGY CO., LTD.) 04 September 2020 (2020-09-04) claims 1-19 | 1-19 |
| X | CN 110738687 A (SHANGHAI EYE CONTROL TECHNOLOGY CO., LTD.) 31 January 2020 (2020-01-31) description paragraphs 0065-0129, 0157, figures 1-3, 6 | 1-19 |
| X | CN 110490899 A (SOUTHEAST UNIVERSITY) 22 November 2019 (2019-11-22) description paragraphs 0045-0069 | 1-19 |
| A | CN 109671103 A (YSTEN TECHNOLOGY CO., LTD.) 23 April 2019 (2019-04-23) entire document | 1-19 |
| A | US 2019191098 A1 (FUJITSU LIMITED) 20 June 2019 (2019-06-20) entire document | 1-19 |
| A | CN 110866428 A (HANGZHOU HIKVISION DIGITAL TECHNOLOGY CO., LTD.) 06 March 2020 (2020-03-06) entire document | 1-19 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 February 2021** | **18 February 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/120965**

| Patent document cited in search report | | | Publication date (day/month/year) | Patent family member(s) | | | Publication date (day/month/year) |
|---|---|---|---|---|---|---|---|
| CN | 111627046 | A | 04 September 2020 | None | | | |
| CN | 110738687 | A | 31 January 2020 | None | | | |
| CN | 110490899 | A | 22 November 2019 | None | | | |
| CN | 109671103 | A | 23 April 2019 | None | | | |
| US | 2019191098 | A1 | 20 June 2019 | JP | 2019109765 | A | 04 July 2019 |
| CN | 110866428 | A | 06 March 2020 | None | | | |

Form PCT/ISA/210 (patent family annex) (January 2015)

**EP 4 152 258 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010415394